# FASCICULE DE BREVET EUROPEEN

(11) **EP 1 249 436 B1**
(45) Date de publication et mention de la délivrance du brevet: **12.10.2005**
(21) Numéro de dépôt: 02290865.1
(22) Date de dépôt: 08.04.2002
(51) Int. Cl.: C05F 17/02, B65F 1/14, E04C 2/42

(54) **Bac destiné à la collecte de déchets, notamment de compost**
Behälter für die Sammlung von Müll, insbesondere von Kompost
Receptacle for the collecting of refuse, particularly of compost

(30) Priorité: 09.04.2001 FR 0104804
(43) Date de publication de la demande: 16.10.2002
(73) Titulaire: COMPAGNIE PLASTIC OMNIUM, 69007 Lyon (FR)
(72) Inventeur: Brazier, Emmanuel, 52200 Langres (FR); Dufour, David, 52200 Langres (FR); Obriot, Denis, 52600 Heuilley-Cotton (FR)
(74) Mandataire: Leszczynski, André

(56) Documents cités:
- EP-A- 0 271 719
- EP-A- 0 374 360
- EP-A- 0 635 465
- DE-A- 3 511 302
- DE-A- 4 241 278
- DE-C- 19 607 789
- DE-U- 9 404 596
- GB-A- 2 070 098
- GB-A- 2 221 643
- US-A- 4 825 603
- US-A- 5 031 796

## Description

La présente invention a pour objet un bac destiné à la collecte de déchets, notamment de compost, comportant une grille de fond de cuve en matière plastique.

On connaît une grille présentant une surface supérieure plane, ce qui permet une fabrication relativement aisée et, du fait de l'absence de reliefs, permet d'éviter que des déchets ne viennent s'accrocher sur la grille.

La demanderesse, en cherchant à améliorer une telle grille, a mis à jour un problème insoupçonné de colmatage des orifices par des sacs jetés dans les bacs.

La présente invention vise à améliorer les bacs comportant des grilles de fond de cuve, et notamment à réduire le risque de colmatage des orifices de la grille.

Elle y parvient grâce à un bac destiné à la collecte de déchets, notamment de compost, comportant une grille en matière plastique de fond de cuve, caractérisé par le fait que ladite grille comporte sur sa face supérieure des nervures qui bordent au moins partiellement au moins certains orifices, ces nervures faisant saillie vers le haut, au-dessus du plan des orifices de la grille.

La présence de ces reliefs permet une meilleure aération des déchets reposant sur la grille, en réduisant le risque de colmatage des orifices par des sacs venant en appui sur sa face supérieure.

Avantageusement, la hauteur des reliefs de la face supérieure est comprise entre 1 et 10 mm, de préférence entre 2 et 8 mm.

La demanderesse a constaté qu'avec une hauteur comprise entre 1 et 10 mm, de préférence entre 2 et 8 mm, on obtient un bon compromis entre une bonne aération et la limitation du risque d'accrochage des déchets.

Avantageusement, les nervures qui bordent au moins partiellement au moins certains orifices entourent chacune un orifice et sont alignées avec le bord de l'orifice correspondant.

Dans une mise en oeuvre particulière de l'invention, la grille comporte des nervures de rigidification sur sa face inférieure, ces nervures étant avantageusement situées en retrait du bord des orifices. Ainsi, elles ne favorisent pas le coincement de déchets dans les orifices de la grille.

Dans une mise en oeuvre particulière de l'invention, aucun des orifices n'est, isolément, complètement entouré par ces nervures de rigidification, ce qui réduit encore le risque de coincement des déchets dans les orifices de la grille.

La grille peut comporter sensiblement en son centre, sur sa face inférieure, une nervure centrale généralement circulaire, à laquelle se raccordent des nervures de rigidification s'étendant sensiblement jusqu'aux bords de la grille. Cette nervure centrale peut entourer des orifices qui sont des hexagones tronqués et une partie centrale pleine qui sert à recevoir des indications concernant la fabrication de la grille, par exemple.

Dans une réalisation particulière, la grille comporte des parties pleines de forme généralement hexagonale, au-dessus de pieds destinés à reposer contre la paroi de fond du bac.

La grille peut comporter six pieds par exemple.

Les nervures de rigidification présentes sur la face inférieure de la grille se raccordent avantageusement au moins à une partie de ces pieds, et de préférence à l'ensemble des pieds.

Dans une réalisation particulière, la grille comporte, sur deux côtés opposés, des passages pour accueillir des axes d'articulation fixés aux parois du bac et permettant à la grille de pivoter lorsqu'elle est en place dans le bac lors du lavage de celui-ci.

Les nervures réalisées sur les faces supérieure et/ou inférieure de la grille comportent avantageusement des bords chanfreinés, afin de ne pas accrocher les déchets.

La grille est avantageusement traversée par une pluralité d'orifices de section généralement polygonale, avec un nombre de côtés compris entre cinq et douze.

Ainsi, la surface ajourée de la grille peut être relativement importante, supérieure à celle qui serait obtenue avec des orifices circulaires. Le pouvoir d'aération de la grille s'en trouve augmenté.

De plus, la section généralement polygonale des orifices permet de limiter les contraintes résiduelles venues de moulage au sein de la grille.

Enfin, le nombre de côtés étant supérieur ou égal à cinq, les orifices sont dépourvus d'angles aigus et, par conséquent, le risque d'accrochage des déchets est réduit.

Dans une mise en oeuvre particulière de l'invention, la grille comporte une pluralité d'orifices de section généralement hexagonale.

Toujours dans une mise en oeuvre particulière, l'aire totale occupée par les orifices de la grille est supérieure à celle occupée par les régions pleines de la grille.

Le bac comporte avantageusement des parois ajourées permettant le passage de l'air pour l'aération des déchets.

D'autres caractéristiques et avantages de la présente invention apparaîtront à la lecture de la description détaillée qui va suivre, d'un exemple de réalisation non limitatif de l'invention, et à l'examen du dessin annexé, sur lequel :
- la figure 1 représente schématiquement en perspective un bac conforme à l'invention, avec arrachement des parois du bac faisant apparaître la grille de fond de cuve,

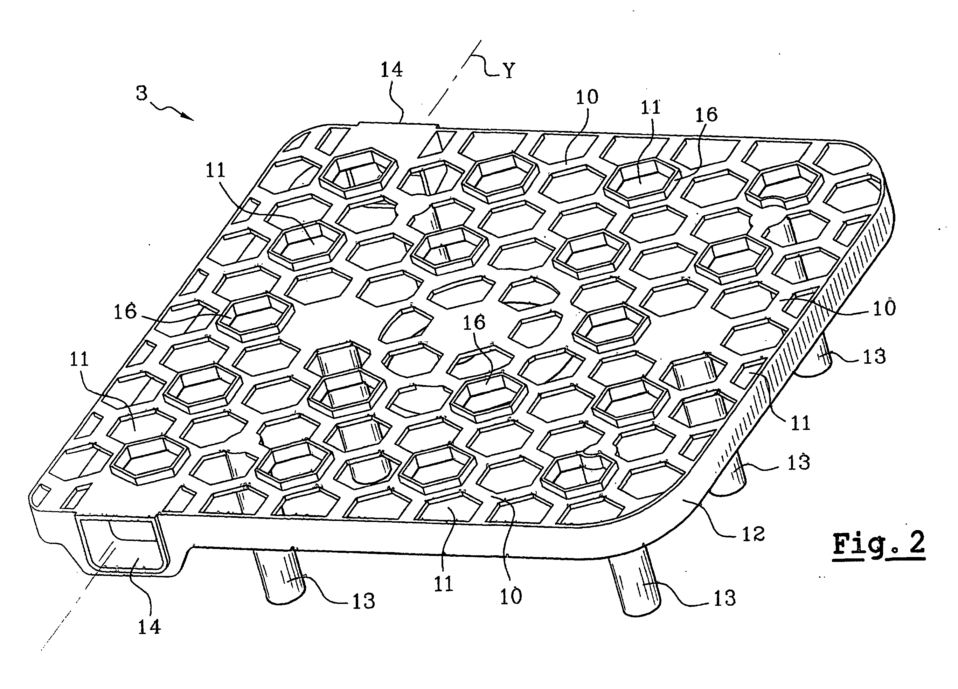

- les figures 2 et 3 représentent schématiquement, en vue en perspective de dessus et de dessous respectivement, la grille de la figure 1,

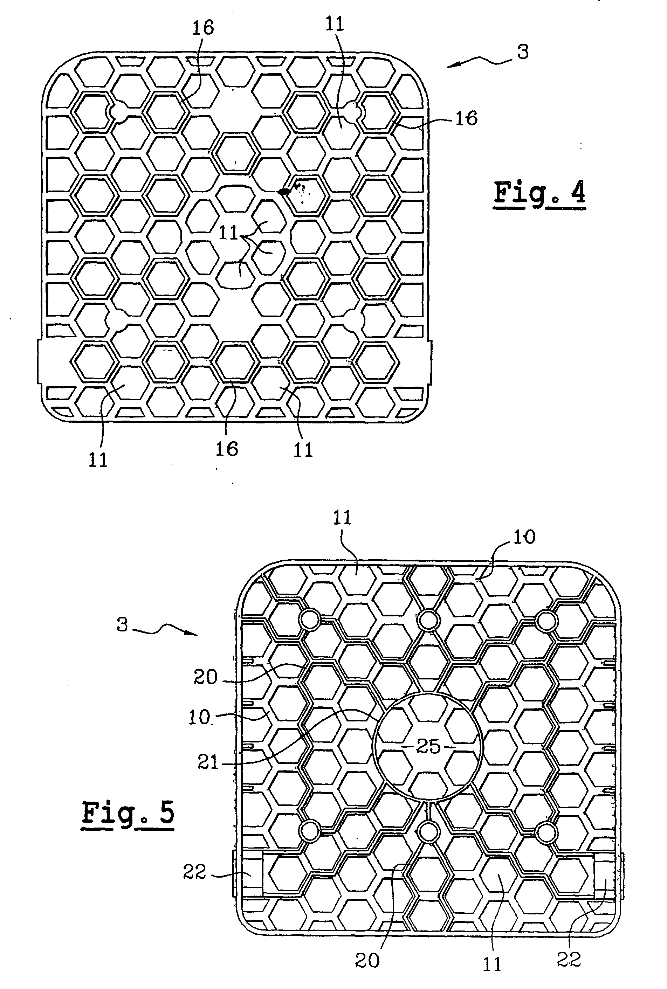

- la figure 4 est une vue schématique de dessus de la grille de la figure 1, et
- la figure 5 est une vue schématique de dessous de la grille de la figure 1.

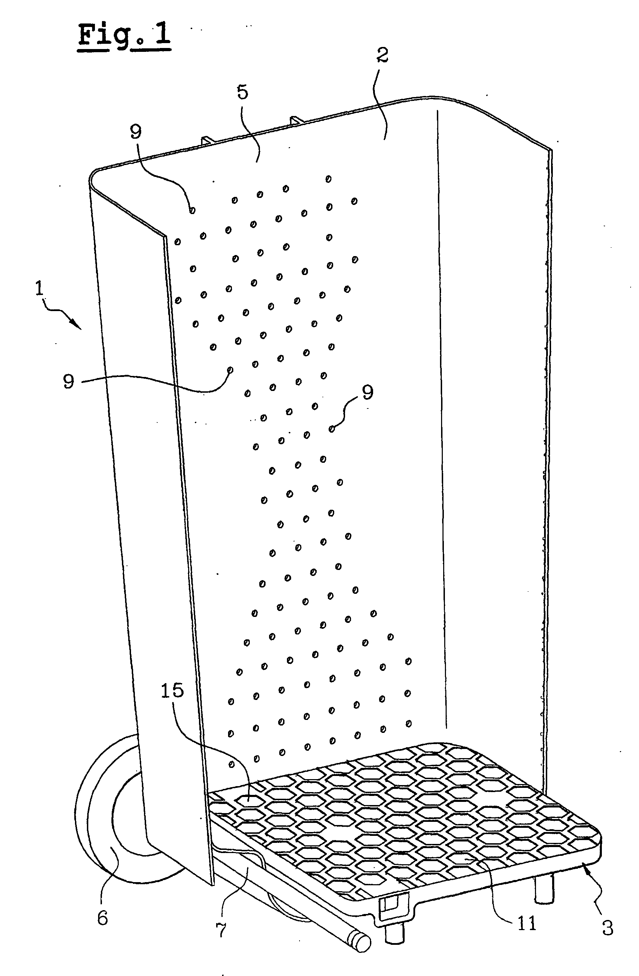

On a représenté sur la figure 1 un bac 1 destiné à la collecte de compost, conforme à l'invention, comportant une cuve 2 au fond de laquelle repose une grille 3 en matière plastique, destinée à permettre la décantation des déchets et leur aération, afin notamment de réduire les nuisances olfactives.

Le bac 1 comporte des parois latérales ajourées 5, traversées par des orifices 9 permettant le passage d'air entre l'intérieur et l'extérieur de la cuve 2, et en partie inférieure des roues 6 reliées par un arbre 7, de manière connue en soi.

La grille 3, réalisée par injection de matière plastique, par exemple une polyoléfine, notamment du polyéthylène haute densité, comporte une paroi généralement horizontale 10 qui est traversée par un réseau d'orifices 11 dont la grande majorité présente une section hexagonale complète.

Les orifices 11 sont agencés, pour la majorité d'entre eux, à la manière d'un nid d'abeilles.

La paroi 10 se raccorde sur son pourtour à une jupe périphérique 12 sensiblement verticale.

La grille comporte des pieds 13, au nombre de six dans l'exemple décrit, se raccordant supérieurement à la paroi 10 et destinés à venir en appui contre la paroi de fond du bac.

La grille 3 comporte en outre, sur deux côtés opposés, des logements 14 destinés à recevoir chacun un axe 15 fixé sur une paroi latérale 5 du bac, afin de permettre un pivotement autour d'un axe géométrique Y vers le haut de la grille 3 lorsque le bac est retourné pour être lavé.

La face supérieure de la paroi 10 est généralement plane, hormis la présence de nervures 16 entourant complètement certains orifices 11 de section hexagonale, un peu moins d'un orifice sur trois dans l'exemple illustré.

Les orifices 11 entourés par les nervures 16 sont répartis sur sensiblement toute la surface supérieure de la grille 3.

Dans l'exemple de réalisation décrit, les nervures 16 présentent un côté tourné vers l'orifice 11 correspondant qui se situe exactement dans l'alignement de celui-ci, ce qui évite la formation d'un décrochement susceptible d'accrocher des déchets.

Les nervures 16 sont chanfreinées à leur partie supérieure, de façon à éviter la présence d'arêtes susceptibles d'accrocher des déchets.

Dans l'exemple illustré, la hauteur des nervures 16 est de l'ordre de 3 mm, ce qui présente un bon compromis entre l'amélioration de l'aération et la limitation du risque d'accrochage des déchets par des parties trop saillantes.

La largeur des nervures 16, dans l'exemple illustré, est inférieure à celle des portions pleines qui séparent les orifices 11 adjacents.

La paroi 10 comporte des parties pleines au-dessus des pieds 13, ainsi qu'au-dessus des logements 14.

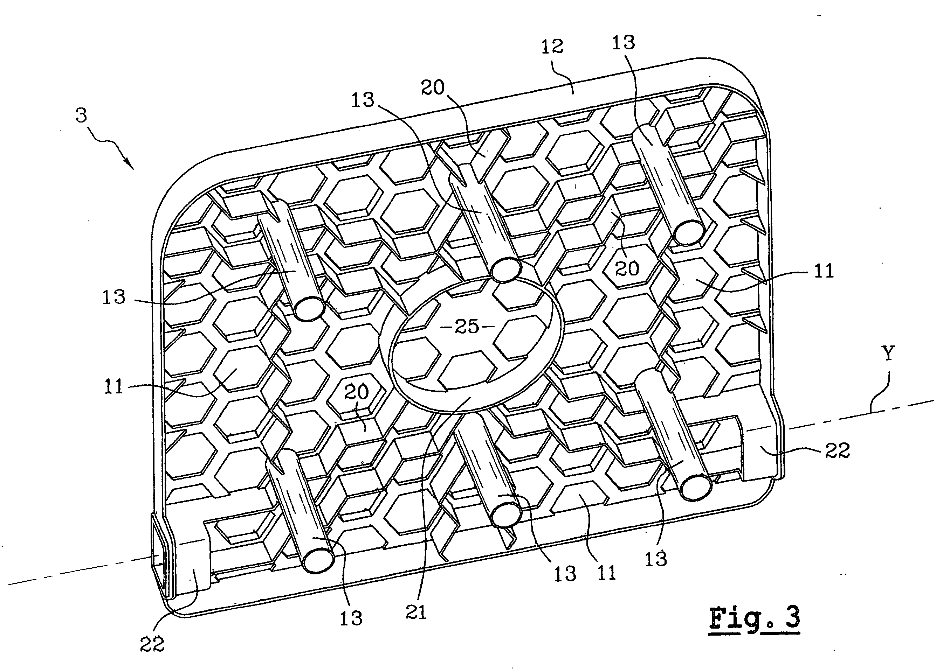

On remarquera que les orifices 11 situés à la périphérie de la grille 3 sont tronqués en raison de la présence de la jupe périphérique 12. Il en est de même de certains orifices 11 présents au centre de la grille, comme on le verra plus loin. Si l'on se reporte à la figure 3, on voit que la grille comporte sous la paroi 10 un ensemble de nervures de renforcement 20, qui s'étendent sur une partie seulement de la largeur des portions pleines qui séparent les orifices 11.

Une partie des nervures 20 se raccorde à une nervure circulaire 21 présente au centre de la grille. Certaines nervures 20 se raccordent également aux pieds 13 à la jupe périphérique 12 et aux parois 22 des logements 14.

Chaque nervure 20 s'étend en retrait des bords des orifices 11 adjacents, de manière à ne pas favoriser le coincement de déchets dans les orifices 11.

Les nervures 20 ont, dans l'exemple décrit, la même hauteur que la jupe périphérique 12, hormis les portions se raccordant aux pieds 13, qui présentent une hauteur plus importante.

La grille 3 comporte en son centre une partie pleine 25 qui peut recevoir sur sa face inférieure des indications concernant la fabrication de la grille, par exemple la date et un numéro de série, lors du moulage ou postérieurement à celui-ci.

Les orifices 11 qui s'étendent autour de la partie pleine 25 sont des hexagones tronqués, en raison de la présence de la nervure circulaire 21.

Bien entendu, l'invention n'est pas limitée à l'exemple de réalisation qui vient d'être décrit.

On peut notamment réaliser des orifices ayant une section autre qu'hexagonale, notamment une section polygonale non régulière ou comportant des côtés qui ne seraient pas tous rectilignes.

Le nombre de côtés peut être différent de celui décrit. Un nombre de côté inférieur à cinq n'est toutefois pas satisfaisant, car les angles aigus formés entre les côtés seraient alors susceptibles d'accrocher les déchets.

Les nervures réalisées sur la face supérieure de la grille pourraient être remplacées par d'autres reliefs.

La grille pourrait également comporter outre des orifices de section polygonale, notamment hexagonale, des orifices ayant une section non polygonale, par exemple circulaire ou elliptique.

## Revendications

1. Bac destiné à la collecte de déchets (1), notamment de compost, comportant une grille en matière plastique de fond de cuve (3), **caractérisé par le fait que** ladite grille (3) comporte sur sa face supérieure des nervures (16) qui bordent au moins partiellement au moins certains orifices (11), ces nervures faisant saillie vers le haut, au-dessus du plan des orifices (11) de la grille.

2. Bac selon la revendication précédente, **caractérisé par le fait que** la hauteur des reliefs (16) de la face supérieure est comprise entre 1 et 10 mm, de préférence entre 2 et 8 mm.

3. Bac selon la revendication 1 ou 2, **caractérisé par le fait que** lesdites nervures (16) entourent chacune un orifice et sont alignées avec le bord de l'orifice correspondant.

4. Bac selon l'une quelconque des revendications précédentes, **caractérisé par le fait que** la grille comporte des nervures de rigidification (20) sur sa face inférieure, situées de préférence en retrait du bord desdits orifices (11).

5. Bac selon la revendication précédente, **caractérisé par le fait qu'**aucun desdits orifices (11) n'est, isolément, complètement entouré par lesdites nervures de rigidification (20).

6. Bac selon l'une des deux revendications précédentes, **caractérisé par le fait que** la grille (3) comporte sensiblement en son centre, sur sa face inférieure, une nervure centrale généralement circulaire (21), à laquelle se raccordent des nervures de rigidification (20) s'étendant sensiblement jusqu'aux bords de la grille.

7. Bac selon la revendication précédente, **caractérisé par le fait que** ladite nervure centrale (21) entoure des orifices qui sont des polygones tronqués et une partie centrale pleine (25) qui sert à recevoir des indications concernant la fabrication.

8. Bac selon l'une quelconque des revendications précédentes, **caractérisé par le fait que** les nervures réalisées sur les faces inférieure et/ou supérieure de la grille comportent des bords chanfreinés.

9. Bac selon l'une quelconque des revendications précédentes, **caractérisé par le fait que** ladite grille (3) comporte six pieds (13) destinés à reposer contre la paroi de fond du bac.

10. Bac selon la revendication précédente, **caractérisé par le fait que** la grille (3) comporte des parties pleines de forme généralement hexagonale, au-dessus desdits pieds (13).

11. Bac selon l'une des deux revendications précédentes, **caractérisé par le fait que** les nervures (20) présentes sur la face inférieure de la grille (3) se raccordent au moins à une partie de ces pieds, et de préférence à l'ensemble des pieds (13).

12. Bac selon l'une quelconque des revendications précédentes, **caractérisé par le fait que** la grille (3) est traversée par une pluralité d'orifices (11) de section généralement polygonale, avec un nombre de côtés compris entre cinq et douze, notamment six.

13. Bac selon la revendication précédente, **caractérisé par le fait que** l'aire totale occupée par les orifices (11) de la grille (3) est supérieure à celle occupée par les régions pleines de la grille (3).

14. Bac selon l'une quelconque des revendications précédentes, **caractérisé par le fait que** ladite grille comporte sur deux côtés opposés des passages pour accueillir des axes d'articulation (15) fixés aux parois du bac et permettant à la grille de pivoter lorsqu'elle est en place dans le bac.

15. Bac selon l'une quelconque des revendications précédentes, **caractérisé par le fait qu'**il comporte des parois ajourées (5).

## Patentansprüche

1. Behälter für das Sammeln von Müll (1), insbesondere von Kompost, der einen Gitterkörper (3) aus Kunststoff des Bodenbereichs des Behälters aufweist, **dadurch gekennzeichnet, dass** dieser Gitterkörper (3) auf seiner oberen Fläche Rippen (16) aufweist, die zumindest teilweise zumindest einige Öffnungen (11) säumen, diese Rippen springen nach oben, oberhalb der Ebene der Öffnungen (11) des Gitterkörpers vor.

2. Behälter nach dem vorangegangenen Patentanspruch, **dadurch gekennzeichnet, dass** die Höhe des Reliefs (16) der oberen Fläche zwischen 1 und 10 mm, vorzugsweise zwischen 2 und 8 mm beträgt.

3. Behälter nach Anspruch 1 oder 2, **dadurch gekennzeichnet, dass** die genannten Rippen (16) jeweils eine Öffnung umranden und mit dem Rand der entsprechenden Öffnung ausgerichtet sind.

4. Behälter nach einem beliebigen der vorangegangenen Patentansprüche, **dadurch gekennzeichnet, dass** der Gitterkörper Versteifungsrippen (20) auf seiner unteren Fläche aufweist, die vorzugsweise zurückgesetzt gegenüber dem Rand dieser Öffnungen (11) angeordnet sind.

5. Behälter nach dem vorangegangenen Patentanspruch, **dadurch gekennzeichnet, dass** keine einzelne der genannten Öffnungen (11) isoliert betrachtet vollständig umrandet ist von den genannten Versteifungsrippen (20).

6. Behälter nach einem der beiden vorangegangenen Patentansprüche, **dadurch gekennzeichnet, dass** der Gitterkörper (3) im Wesentlichen in seinem Mittelbereich und auf seiner unteren Fläche eine allgemein kreisförmige Zentralrippe (21) aufweist, an die sich die Versteifungsrippen (20) anschließen, welche sich im Wesentlichen bis zum Rand des Gitterkörpers erstrecken.

7. Behälter nach dem vorangegangenen Patentanspruch, **dadurch gekennzeichnet, dass** die genannte Zentralrippe (21) Öffnungen, die abgeschnittene Polygone sind, und eine zentrale Ebene 25 umgibt, die dazu dient, Hinweise bezüglich der Herstellung aufzunehmen.

8. Behälter nach einem beliebigen der vorangegangenen Patentansprüche, **dadurch gekennzeichnet, dass** die auf der oberen Fläche und/oder auf der unteren Fläche des Gitterkörpers realisierten Rippen abgefaste Kanten aufweisen.

9. Behälter nach einem beliebigen der vorangegangenen Patentansprüche, **dadurch gekennzeichnet, dass** der genannte Gitterkörper (3) sechs Füße (13) aufweist, die dafür vorgesehen sind, an eine Wandung im Boden des Behälters zur Auflage zu kommen.

10. Behälter nach dem vorangegangenen Patentanspruch, **dadurch gekennzeichnet, dass** der Gitterkörper (3) ebene Bereiche mit allgemein hexagonaler Form oberhalb der genannten Füße (13) aufweist.

11. Behälter nach einem der beiden vorangegangenen Patentansprüche, **dadurch gekennzeichnet, dass** die an der unteren Fläche des Gitterkörpers (3) vorgesehenen Rippen (20) mit zumindest einem Teilbereich der genannten Füße (13) verbunden sind, vorzugsweise mit der Gesamtheit der Füße (13) verbunden sind.

12. Behälter nach einem beliebigen der vorangegangenen Patentansprüche, **dadurch gekennzeichnet, dass** der Gitterkörper (3) von einer Vielzahl von Öffnungen (11) durchsetzt ist, die allgemein einen polygonalen Querschnitt haben, wobei die Anzahl der Seiten im Bereich von fünf und zwölf liegt und vorzugsweise sechs beträgt.

13. Behälter nach dem vorangegangenen Patentanspruch, **dadurch gekennzeichnet, dass** das Gesamtvolumen, das von den Öffnungen (11) des Gitterkörpers (3) eingenommen wird, größer ist als das Gesamtvolumen, das von den mit Materie gefüllten Bereiche des Gitterkörpers (3) ausgefüllt wird.

14. Behälter nach einem beliebigen der vorangegangenen Patentansprüche, **dadurch gekennzeichnet, dass** der genannte Gitterkörper (3) auf zwei gegenüberliegenden Seiten Passagen aufweist, um Drehachsen (15) aufzunehmen, die an den Wänden des Behälters befestigt sind und ein Verschwenken des Gitterkörpers (3) ermöglichen, wenn er an seinem Platz im Behälter ist.

15. Behälter nach einem beliebigen der vorangegangenen Patentansprüche, **dadurch gekennzeichnet, dass** er gelochte Wände (5) aufweist.

## Claims

1. A bin for collecting waste (1), in particular compost, the bin carrying a grid (3) of plastics material on its bottom and being **characterized by** the fact that said grid (3) has ribs (16) on its top face bordering at least some of the orifices (11), at least in part, said ribs projecting upwards, above the plane of the orifices (11) of the grid.

2. A bin according to the preceding claim, **characterized by** the fact that the ribs (16) on the top face are of a height lying in the range 1 mm to 10 mm, and preferably in the range 2 mm to 8 mm.

3. A bin according to claim 1 or claim 2, **characterized by** the fact that each of said ribs (16) surrounds one orifice and is in alignment with the edge of the corresponding orifice.

4. A bin according to any preceding claim, **characterized by** the fact that the grid has stiffening ribs (20) on its bottom face, preferably set back from the edges of said orifices (11).

5. A bin according to the preceding claim, **characterized by** the fact that none of said orifices (11) is completely surrounded in isolation by said stiffening ribs (20).

6. A bin according to either one of the two preceding claims, **characterized by** the fact that the grid (3) has a generally circular central rib (21) at its center and on its bottom face, which circular rib is connected to stiffening ribs (20) extending substantially to the edges of the grid.

7. A bin according to the preceding claim, **characterized by** the fact that said central rib (21) surrounds orifices in the form of truncated polygons together with a solid central portion (25) which receives mentions relating to manufacture.

8. A bin according to any preceding claim, **characterized by** the fact that the ribs made on the bottom and/or top faces of the grid have chamfered edges.

9. A bin according to any preceding claim, **characterized by** the fact that the grid (3) has six legs (13) for standing on the bottom wall of the bin.

10. A bin according to the preceding claim, **characterized by** the fact that the grid (3) has solid portions of generally hexagonal shape over said legs (13).

11. A bin according to either one of the two preceding claims, **characterized by** the fact that the ribs (20) present on the bottom face of the grid (3) are connected to at least some of the legs, and preferably to all of the legs (13).

12. A bin according to any preceding claim, **characterized by** the fact that the grid (3) is pierced by a plurality of orifices (11) of generally polygonal section, having a number of sides lying in the range five to twelve, and in particular having six sides.

13. A bin according to the preceding claim, **characterized by** the fact that the total area occupied by the orifices (11) of the grid (3) is greater than the area occupied by the solid regions of the grid (3).

14. A bin according to any preceding claim, **characterized by** the fact that said grid has passages on two opposite sides for receiving hinge pins (15) fixed to the walls of the bin and enabling the grid to pivot when it is in place in the bin.

15. A bin according to any preceding claim, **characterized by** the fact that it has walls (5) that are perforated.
